# EUROPEAN PATENT SPECIFICATION

(11) **EP 1 502 884 B1**
(45) Date of publication and mention of the grant of the patent: **28.05.2008**
(21) Application number: 04077196.6
(22) Date of filing: 30.07.2004
(51) Int. Cl.: B65G 47/90

(54) **Gripper device with intermediate plates for holding packages**
Greifer mit Zwischenplatten zum Halten von Packungen
Dispositif de préhension avec plaques intermédiaires pour maintenir des emballages

(30) Priority: 31.07.2003 EP 03077407
(43) Date of publication of application: 02.02.2005
(73) Proprietor: FPS Food Processing Systems B.V., 2631 RE Nootdorp (NL)
(72) Inventor: Van den Brink, Henry, 3774 LJ Kootwijkerbroek (NL); Doppenberg, Gerrit, 3881 ST Putten (NL)
(74) Representative: Winckels, Johannes Hubertus F.

(56) References cited:
- EP-A- 1 285 870
- US-A- 2 488 826

## Description

The invention relates to a gripper device according to the preamble of claim 1.

Such a device is known from EP 1285870 of applicant. It is elaborately elucidated in this application that it needs to be possible for different patterns of units to be picked up and that, also, all covers are to remain closed during the pickup. This is achieved with the aid of the combination of at least one horizontal plate and of flaps or intermediate plates. Here, the horizontal plate presses the covers by closed, or keeps them closed when they have been closed. The intermediate plates are vertically suspended in openings or slots of a bottom plate of the gripper head and further downwards between the abovementioned horizontal plates, while these intermediate plates position themselves between the units during the pickup. When the gripper blades press together, the intermediate plates form such a support that the units can be clamped, picked up, transferred and put down again.

It has been found that such a combination works well. However, a problem is formed by the many shapes that the units may have. For instance in the egg business, more in particular with regard to the supplier, such as a chain store business or packing station, there appear to be regular switches to slightly or radically modified egg containers. This is not only done to improve the ease of handling thereof, but frequently to enhance the visibility and the possibility for printing. An answer to such a problem is urgently desired, all the more since very large numbers of units are involved in the current self-service market.

In order to obviate the drawback described, the gripper device according to the present invention is characterized in that the intermediate plates are each pressed in substantially vertical direction with a spring member. In a preferred embodiment the top end of each intermediate plate is connected with at least one single draw spring which is, on the other end, connected with the housing, for instance with the bottom plate, while, more in particular, the top end of each intermediate plate is pressed by the leaf of a leaf spring, the leaf spring being connected with the housing, for instance with the bottom plate.

It is achieved in a suitable manner that the intermediate plates are not only self-searching, but also, particularly with slightly different shapes of the units, such as for instance egg containers, are hardly hampered by these and will still be positioned between the units by pressing with springs.

In a further embodiment, the device is characterized in that, in a suspended main portion and near the suspended end, the intermediate plates will, with at least one single bend, merge into an engaging edge, with an angle between 0° and 40° between main portion and engaging edge, with the engaging edge, upon engaging, ending at the height of the bottom portion of such a unit, in particular that the intermediate plates have a second bend in the main portion, with a transition portion being formed between the main portion and the engaging edge, with an angle between 0° and -40° for the second bend, with the engaging edge, upon engaging, ending at the height of the bottom portion of such a unit.

It is achieved with advantage that an intermediate plate assumes the shape of a hand even more in order to be able to engage the edges of a unit in a similar manner.

In a further embodiment, one of the sides of the intermediate plate is provided with a material structure with great friction at the location of the downward end thereof.

In a very suitable manner, this friction can thus be used on the engaging side of an engaging edge.

In still another embodiment, the device is characterized in that the intermediate plate ends at the height of the cover portion of such a unit, with the intermediate plate being provided with a bottom edge having the shape of a claw edge with claw members, for instance hooks or teeth, which extend to both sides of the claw edge, for engaging the covers correspondingly placed on both sides.

In this manner, it is very advantageously possible to pick up units mutually connected with a crease connection edge, while the claw edge engages and supports at the same time.

The invention will hereinafter be elucidated in detail, in which:
Fig. 1 diagrammatically shows a view of a first exemplary embodiment,
Fig. 2 diagrammatically shows a view of a second exemplary embodiment,
Fig. 3 diagrammatically shows a view of a third exemplary embodiment.

In the different figures, same parts are numbered the same.

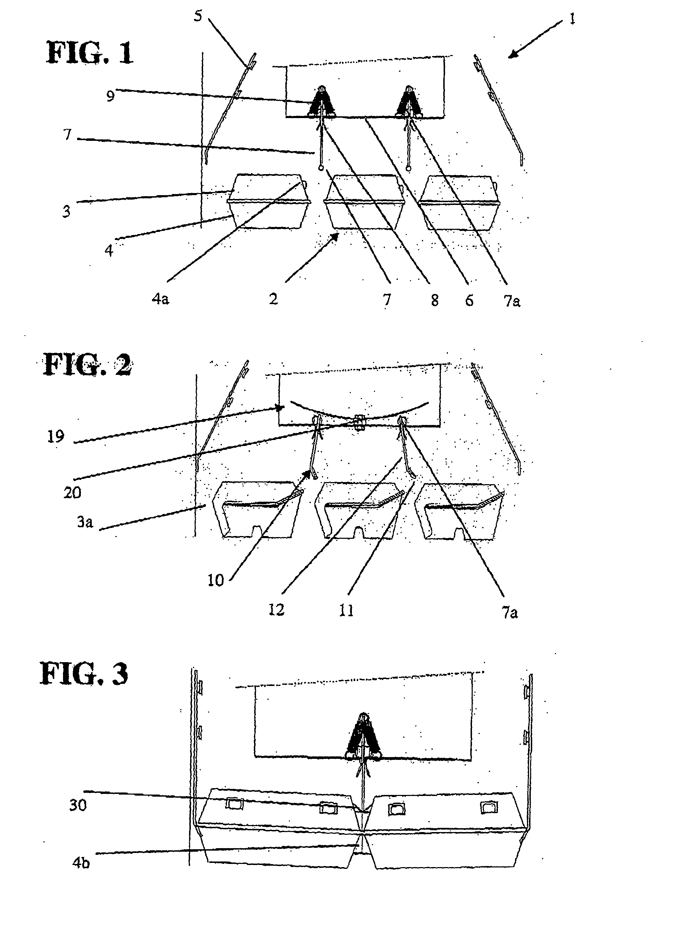

In Fig. 1, gripper device 1 with gripper blades 5 is positioned such that units 2, for instance egg containers with cover 3, bottom portion 4, which are provided with thickenings 4a over which the cover 3, with holes therein in suitable positions, snaps upon closing, can be picked up. During the controlled positioning of the device, in Fig. 1 downwards, intermediate plates 7 lower between the units 2. These intermediate plates 7, two in number to place between three units (and therefore generally n in relation to (n+1)), are suspended in slots 8 of a bottom plate 6 of the housing in which, also, the control members (not shown) for the gripper blades 5 are present. The intermediate plates 7 are supported in the bottom plate 6 by supporting edges 7a, while their top ends are connected with the housing, more in particular the bottom plate 6, with springs 9. These springs are coil springs, functioning as draw springs.

Particularly in the case that the units 2 are less symmetrically shaped as shown in Fig. 1, the intermediate plates 7 may encounter edges when moving downwards. In order for the downward end to still reach the height of the bottom portion 4, the intermediate plates will be pushed down or pressed down by the springs 9, after which reliable pickup, transfer and placement of the units is possible again. For the operation of the clamping members (not shown in the Figures), for instance designed as horizontal plate, reference is made to EP 1285870.

Fig. 2 shows units 2 which are, most clearly in the view direction, not symmetrical, with, in particular, a cover bend 3a in the cover 3. Near their downward ends, the intermediate plates 7 are provided with a bend 10, whereby a main portion 11 and an engaging edge 12 are obtained. In addition, in this embodiment, the supporting edges do not have a symmetrical design either, so that, upon moving downwards, the main portion is not strictly vertically suspended anymore, but will incline to one direction or another. The intermediate plate forms, as it were, a hand which, upon pressing between the units, adjusts to the shape of such a unit 2. In this embodiment, the spring member is a leaf spring 19 which is connected with the bottom plate by a clamping screw. With this leaf spring, it is achieved in a suitable manner that simultaneous rotating and pressing of the intermediate plates is obtained, more than in the embodiment according to Fig. 1, because, there, the symmetrically mounted springs will actually pursue the vertical direction.

It has been found that a suitable bend has an angle between 0° and 40°.

A further possibility, which is not shown in a Figure, is that in which, in a position slightly higher than the bend shown, another bend has been provided, but in a different direction, with, in that case, angles between 0° and -40°. In such an embodiment, the natural shape of the hand is even better approximated since something like a wrist joint is also imitated.

In Fig. 3, the units 2 are mutually connected with a crease connection edge 4b. In this embodiment according to the present invention, intermediate plates 7 are used which end higher, but are provided with a claw edge 30 at their ends, for instance teeth or a projection to both sides to be able to thus puncture the covers and to be able to exert a supporting force in pickup, transfer and placement.

## Claims

1. A gripper device (1) for displacing at least one single unit (2) of consumer packages, such as egg containers, which units (2) function as package for individual products and are provided with a cover (3) and a bottom portion (4), comprising
- gripper members (5), for instance gripper blades, movable in a rotating and translating manner with the aid of control members accommodated in a housing, wherein the gripper members (5) engage such units (2) on two opposite longitudinal sides thereof, in order for said units (2), after being closed to be picked up, transferred and subsequently placed in outer packages in a controlled manner, and to be picked up from the outer package in the same manner,
- clamping members, for instance at least one single horizontal pressing plate, for keeping the cover (3) closed during pickup, transfer and discharge of the said closed units (2), and
- n holder members, with n ≥ 1, which members are placed between the at least (n+1) units (2) in order to keep these units in their relative positions during pickup, transfer and placement, in cooperation with the gripper members (5) and the clamping members, wherein the holder members consist of intermediate plates (7) which, during transfer, are suspended virtually vertically through slots (8) in a bottom plate (6) of the housing and are clamped between the units (2),
**characterized in that**
the intermediate plates (7) are each pressed in substantially vertical direction by means of a spring member (9, 19).

2. A device according to claim 1, **characterized in that**
the top end of each intermediate plate (7) is connected with at least one single draw spring (9) which is, at the other end, connected with the housing, for instance with the bottom plate (6).

3. A device according to claim 1, **characterized in that**
the top end of each intermediate plate (7) is pressed by the leaf of a leaf spring (19), wherein the leaf spring (19) is connected with the housing, for instance with the bottom plate (6).

4. A device according to any one of the preceding claims, **characterized**
**in** a suspended main portion (11) and near the suspended end, the intermediate plates (7) will, with at least one single bend (10), merge into an engaging edge (12), with an angle between 0° and 40° between main portion (11) and engaging edge (12), wherein the engaging edge (12), upon engaging, ends at the height of the bottom portion (4) of such a unit (2).

5. A device according to claim 4, **characterized in that**
the intermediate plates (7) have a second bend in the main portion (11), wherein a transition portion is formed between the main portion (11) and the engaging edge (12), with an angle between 0° and -40° for the second bend, wherein the engaging edge (12), upon engaging, ends at the height of the bottom portion (4) of such a unit (2).

6. A device according to any one of the preceding claims, **characterized in that**
one of the sides of the intermediate plate (7) is provided with a material structure with great friction at the location of the downward end thereof.

7. A device according to claim 1, 2 or 3, **characterized in that**
the intermediate plate (7) ends at the height of the cover portion (3) of such a unit (2), wherein the intermediate plate (7) is provided with a bottom edge which has the form of a claw edge (30) with claw members for instance hooks or teeth, which extend to both sides of the claw edge (30), for engaging the covers (3) correspondingly placed on both sides.

## Patentansprüche

1. Greifereinrichtung (1) zur Verlagerung mindestens einer Einheit (2) Von Verbaucherpackungen wie Eierbehälter, welche Einheiten (2) als Verpackung für individuelle Produkte fungieren und mit einem Deckel (3) und einem Bodenteil (4) versehen sind, welche Einrichtung umfasst
- Greifglieder (5), beispielsweise Greifblätter, die mittels in einem Gehäuse untergebrachter Steuerglieder rotativ und translatorisch beweglich sind, wobei die Greifglieder (5) die Einheiten (2) auf zwei einander gegenüberliegenden Längsseiten derselben erfassen, damit die Einheiten (2), nachdem sie geschlossen worden sind, aufgegriffen, verlagert und dann in Umverpackungen in einer gesteuerten Weise abgesetzt und aus der Umverpackung in der gleichen Weise herausgenommen werden können,
- Klemmglieder, beispielsweise mindestens eine horizontale Druckplatte, um den Deckel (3) während des Aufgreifens, der Verlagerung und der Abgabe der geschlossenen Einheiten (2) geschlossen zu halten, und
- n-Halter, mit n≥1, die zwischen den mindestens (n+1) Einheiten (2) angeordnet sind, um diese Einheiten in ihren gegenseitigen Positionen während des Aufgreifens, der Verlagerung und des Absetzens im Zusammenwirken mit den Greifgliedem (5) und den Klemmgliedem zu halten, wobei die Halter aus Zwischenplatten (7) bestehen, die während der Verlagerung im wesentlichen vertikal hängend durch Schlitze (8) in der Bodenplatte (6) des Gehäuses ragen und zwischen den Einheiten (2) eingeklemmt werden,
**dadurch gekennzeichnet,**
**dass** die Zwischenplatten (7) durch ein Federglied (9,19) in eine im wesentlichen vertikale Richtung gedrückt werden.

2. Einrichtung nach Anspruch 1, **dadurch gekennzeichnet, dass** das obere Ende jeder Zwischenplatte (7) mit jeweils mindestens einer Zugfeder (9) verbunden ist, die ihrerseits mit dem anderen Ende mit dem Gehäuse verbunden ist, beispielsweise mit der Bodenplatte (6).

3. Einrichtung nach Anspruch 1, **dadurch gekennzeichnet, dass** das obere Ende jeder Zwischenplatte (7) unter dem Druck einer Blattfeder (19) steht, wobei die Blattfeder (19) mit dem Gehäuse, beispielsweise mit der Bodenplatte (6) verbunden ist.

4. Einrichtung nach einem der vorangehenden Ansprüche, **dadurch gekennzeichnet, dass** in einem hängenden Hauptteil (11) und nahe dem hängenden Ende die Zwischenplatten (7) mit mindestens einer einzelnen Abbiegung (10) in eine Angriffskante (12) übergehen, wobei zwischen dem Hauptteil (11) und der Angriffskante (12) ein Winkel zwischen 0 und 40° vorhanden ist, wobei die Angriffskante (12) beim Angriff in Höhe des Bodenteils (4) einer solchen Einheit (2) endet.

5. Einrichtung nach Anspruch 4, **dadurch gekennzeichnet, dass** die Zwischenplatten (7) in dem Hauptteil (11) eine zweite Abbiegung aufweisen, in der zwischen dem Hauptteil (11) und der Angriffskante (12) ein Übergangsteil gebildet ist, wobei ein Winkel zwischen 0 und -40° für die zweite Biegung gegeben ist und die Angriffskante (12) beim Angriff in Höhe des Bodenteils (4) einer solchen Einheit (2) endet.

6. Einrichtung nach einem der vorangehenden Ansprüche, **dadurch gekennzeichnet, dass** eine der Seiten der Zwischenplatte (7) im Bereich ihres unteren Endes mit einer Materialstruktur mit großer Reibung versehen ist.

7. Einrichtung nach einem der Ansprüche 1, 2 oder 3, **dadurch gekennzeichnet, dass** die Zwischenplatte (7) in der Höhe des Deckels (3) einer solchen Einheit (2) endet, wobei die Zwischenplatte (7) mit einer unteren Kante versehen ist, die die Form einer Klauenkante (30) mit Klauengliedern wie z.B. Haken oder Zähnen hat, die sich nach beiden Seiten der Klauenkante (30) erstrecken, um die auf beiden Seiten einander entsprechend angeordneten Deckel (3) zu erfassen.

## Revendications

1. Dispositif de préhension (1) pour déplacer au moins une seule unité (2) d'emballages de vente, tels que des boîtes à oeufs, lesquelles unités (2) servent d'emballage pour des produits individuels et sont pourvues d'un couvercle (3) et d'une partie inférieure (4), comprenant:
- des éléments de préhension (5), par exemple des lames de préhension, mobiles de manière rotative et en translation à l'aide d'éléments de commande logés dans un logement, dans lequel les éléments de préhension (5) entrent en prise avec de telles unités (2) sur deux côtés longitudinaux opposés de celles-ci, afin que lesdites unités (2), après avoir été fermées pour être prises, transférées et par la suite positionnées dans des emballages extérieurs de manière contrôlée, soient prises à partir de l'emballage extérieur de la même manière,
- des éléments de serrage, par exemple au moins une seule plaque de compression horizontale, pour maintenir le couvercle (3) fermé au cours de la prise, du transfert et de la décharge desdites unités fermées (2), et
- n éléments de retenue, avec n ≥ 1, lesquels éléments sont positionnés entre les au moins (n + 1) unités (2) afin de maintenir ces unités dans leurs positions relatives au cours de la prise, du transfert et du positionnement, en coopération avec les éléments de préhension (5) et les éléments de serrage, dans lequel les éléments de retenue sont constitués de plaques intermédiaires (7) qui, au cours du transfert, sont suspendues de façon virtuellement verticale à travers des fentes (8) dans une plaque inférieure (6) du logement et sont serrées entre les unités (2),
**caractérisé en ce que**
les plaques intermédiaires (7) sont chacune comprimées dans une direction sensiblement verticale au moyen d'un élément de ressort (9, 19).

2. Dispositif selon la revendication 1, **caractérisé en ce que** l'extrémité supérieure de chaque plaque intermédiaire (7) est reliée à au moins un seul ressort de traction (9) qui est, au niveau de l'autre extrémité, relié au logement, par exemple à la plaque inférieure (6).

3. Dispositif selon la revendication 1, **caractérisé en ce que** l'extrémité supérieure de chaque plaque intermédiaire (7) est comprimée par la lame d'un ressort à lame (19), dans lequel le ressort à lame (19) est relié au logement, par exemple à la plaque inférieure (6).

4. Dispositif selon l'une quelconque des revendications précédentes, **caractérisé en ce que**, dans une partie principale suspendue (11) et près de l'extrémité suspendue, les plaques intermédiaires (7), avec au moins une seule courbure (10) fusionneront avec un bord d'entrée en prise (12), avec un angle compris entre 0° et 40° entre la partie principale (11) et le bord d'entrée en prise (12), dans lequel le bord d'entrée en prise (12), lors de l'entrée en prise, se termine à la hauteur de la partie inférieure (4) d'une telle unité (2).

5. Dispositif selon la revendication 4, **caractérisé en ce que** les plaques intermédiaires (7) possède une second courbure dans la partie principale (11), dans lequel une partie de transition est formée entre la partie principale et le bord d'entrée en prise (12), avec un angle compris entre 0° et -40° pour la seconde courbure, dans lequel le bord d'entrée en prise (12), lors de l'entrée en prise, se termine à la hauteur de la partie inférieure (4) d'une telle unité (2).

6. Dispositif selon l'une quelconque des revendications précédentes, **caractérisé en ce qu'**un des côtés de la plaque intermédiaire (7) est pourvu d'une structure de matériau avec un frottement important au niveau de l'emplacement de l'extrémité inférieure de celui-ci.

7. Dispositif selon la revendication 1, 2 ou 3, **caractérisé en ce que** la plaque intermédiaire (7) se termine à la hauteur de la partie de couvercle (3) d'une telle unité (2), dans lequel la plaque intermédiaire (7) est pourvue d'un bord inférieur qui présente la forme d'un bord à griffes (30) avec des éléments de griffe, par exemple des crochets ou des dents, qui s'étendent jusqu'aux deux côtés du bord à griffe (30), pour entrer en prise avec les couvercles (3) positionnés de façon correspondante sur les deux côtés.
